# EUROPEAN PATENT APPLICATION

(11) **EP 4 557 294 A1**
(43) Date of publication of application: **21.05.2025**
(21) Application number: 23209697.4
(22) Date of filing: 14.11.2023
(51) Int. Cl.: G11C 29/38, G11C 29/36, G11C 7/24, H04L 9/08

(54) **MEMORY CHECKING METHOD AND APPARATUS**

(71) Applicant: NXP B.V., 5656 AG Eindhoven (NL)
(72) Inventor: Spence, Nicholas Justin Mountford, 5656AG Eindhoven (NL); Perez Chamorro, Jorge Ernesto, 5656AG Eindhoven (NL)
(74) Representative: Miles, John Richard

(57) **Abstract**

A method and apparatus for checking the contents of a memory in an integrated circuit is described. The on-chip memory checker includes a result first-in-first-out storage element (FIFO), a checksum engine coupled to the memory, and a comparison module. The method includes the steps of generating a seed value and providing the seed value to the checksum engine. During a test sequence a number of tests are applied to the memory. Each test includes the steps of (i) generating a checksum of a plurality of data values stored in a memory region of the memory by the checksum engine (ii) comparing by the comparison module the checksum with a reference value provided by the result FIFO and (iii) outputting the test result. The checksum is stored in the result FIFO as a reference value for a subsequent test. Multiple test sequences with different (random) seed values may be used.

## Description

### FIELD

This disclosure relates to a memory checker and memory checking method.

### BACKGROUND

System-on-chip (SoC) devices may include secure memory regions implemented as one-time programmable fuses which may be referred to as a fusebox. The fusebox typically includes values intended to be kept secret such as encryption keys and device identification values. An On-Chip One-Time Programmable (OCOTP) controller may be used to write the secret values into the on-chip fusebox at different points in the SoC fabrication and provisioning lifecycle.

Memory contents may be validated by reading the memory contents, generating a checksum and comparing the checksum with an expected value. However, an OCOTP controller may protect the contents using encryption to obfuscate the values stored in the fusebox and read protection to prevent some words from being read by software. The values written include random numbers and chip specific values, and the encryption may further vary the fusebox contents, so that the expected contents and checksum cannot be predicted.

### SUMMARY

Various aspects of the disclosure are defined in the accompanying claims. In a first aspect there is provided there is provided a method of memory checking in a device comprising a memory, a result first-in-first-out storage element (FIFO), a checksum engine coupled to the memory, and a comparison module, the method comprising: generating a seed value; providing the seed value to the checksum engine; applying a test sequence comprising a plurality of tests, each test including the steps of: generating a checksum of a plurality of data values stored in a memory region of the memory by the checksum engine; comparing by the comparison module the checksum with a reference value provided by the result FIFO; outputting a test result based on the comparison; and storing the checksum in the result FIFO.

In some embodiments, the method further comprises: generating a further seed value; providing the further seed value to the checksum engine; applying a further test sequence comprising a plurality of further tests, each further test including the steps of: generating the checksum of the plurality of data values by the checksum engine; comparing by the comparison module the checksum with the reference value provided by the result FIFO; outputting a test result based on the comparison; and storing the checksum in the result FIFO. In some embodiments, the method further comprises initializing the result FIFO with the seed value. The reference value may be the checksum of a previous test in the test sequence. In some embodiments, each test in the test sequence is applied using a different memory bit read voltage threshold. In some embodiments, the plurality of data values are stored in one-time-programmable memory.

In a second aspect, there is provided a memory checker configured to be coupled to a memory having a memory region to be checked, the memory checker comprising: a checksum engine coupled to the memory; a result first-in-first-out storage element (FIFO) coupled to the checksum engine; a comparison module coupled to the checksum engine and the result FIFO; a random seed generator coupled to the checksum engine; wherein during a test mode of operation, the random seed generator is configured to generate a first random seed value, and for each test of a first plurality of tests: the checksum engine is configured to be initialized with the first random seed value and to generate a checksum of a plurality of data values stored in the memory region; the comparison module is configured to compare the checksum with a reference value provided by the result FIFO and output a test result based on the comparison; and the result FIFO is configured to store the checksum.

In some embodiments, the random seed generator is configured to generate the first random seed value in response to at least one of a reset signal and software command. In some embodiments, during the test mode of operation the random seed generator is further configured to generate a second random seed value, and for each test of a second plurality of tests: the checksum engine is configured to be initialized with the second random seed value and to generate a checksum of the plurality of data values; the comparison module is configured to compare the checksum with a reference value provided by the result FIFO and output a test result based on the comparison; and the result FIFO is configured to store the checksum. In some embodiments, the result FIFO is coupled to the random seed generator and further initializing the result FIFO with a seed value. In some embodiments, the reference value is the checksum of a previous test in the first plurality of tests and the second plurality of tests. In some embodiments, the reference value is the checksum of a previous test in the first plurality of tests and the second plurality of tests. In some embodiments, each test in the first plurality of tests and the second plurality of tests is applied using a different memory bit read voltage threshold.

In some embodiments, the checksum engine further comprises: a counter having a counter output configured to be coupled to an address input of the memory; a first address register coupled to the counter and configured to store a first address of the memory region; a last address register coupled to the counter and configured to store a last address of the memory region; a checksum linear feedback shift register (LFSR) configured to be coupled to a data output of the memory, the random seed generator, the result FIFO and the comparison module; and wherein during each test the counter is configured to generate a sequence of addresses from the first memory region address to the last memory region address, and the checksum LFSR is configured to generate the checksum of the plurality of data values.

In some embodiments, the memory checker further comprises a controller configured to be coupled to the memory and coupled to the checksum LFSR, the result FIFO, and the counter and configured to control the counter to reset the counter and the checksum LFSR at a start of each test and to control the result FIFO to update the reference value from the checksum at an end of each test.

In some embodiments, the result FIFO is a register. Embodiments of the memory checker may be included in device. The device includes a memory coupled to the memory checker. In some embodiments, the memory region comprises one-time-programmable memory. The device may be a system-on-chip (SoC) or other integrated circuit.

### BRIEF DESCRIPTION OF THE DRAWINGS

In the figures and description like reference numerals refer to like features. Embodiments are now described in detail, by way of example only, illustrated by the accompanying drawings in which:
Figure 1 shows a memory checking apparatus according to an embodiment.
Figure 2 illustrates a test sequence using the memory checking apparatus of figure 1.
Figure 3 shows a method of memory checking according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

### DETAILED DESCRIPTION OF EMBODIMENTS

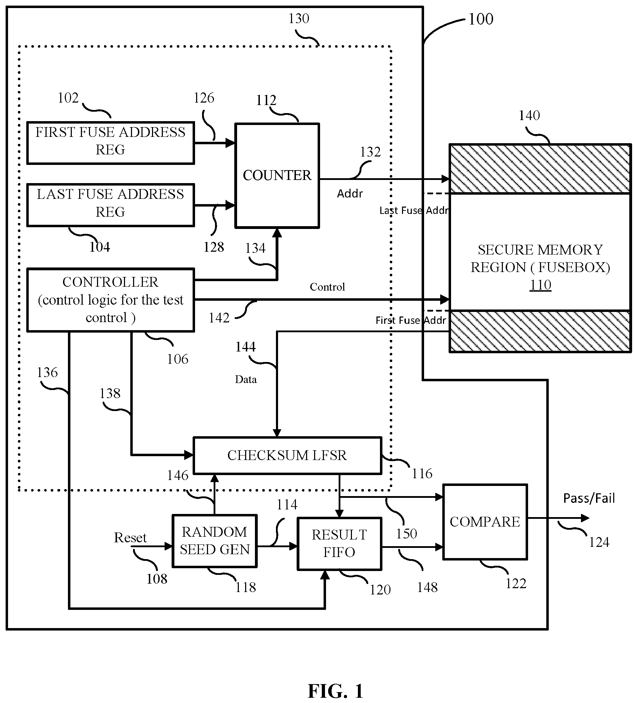

Figure 1 shows a memory checking apparatus 100 according to an embodiment. The memory checking apparatus 100 is coupled to a memory 140 having a secure memory region 110 including a fusebox. The memory checking apparatus 100 includes a checksum engine 130. The checksum engine 130 includes a first fuse address register 102, a last fuse address register 104, a controller 106, a counter 112 and a checksum linear feedback shift register ( LFSR) 116. The memory checking apparatus 100 further includes a random seed generator 118, a result FIFO 120 and a comparison module 122. In some examples, the controller 106 may be located outside the checksum engine 130. The checksum engine 130, result FIFO 120 and comparison module 122 are located on the SoC die. It will be appreciated, that memory 140 may be coupled to further circuitry (not shown) during normal operation of the SoC.

The first fuse address register 102 and last fuse address register 104 store the first fuse memory address and last fuse memory address respectively. In other examples, the address registers 102, 104 may store addresses of a secure memory region to be checked. The first fuse address register 104 has an output 126 connected to the counter 112. The last fuse address register 104 has an output 128 connected to the counter 112. A counter output 132 is connected to the address input of the memory 140. The checksum LFSR 116 has an input connected to the data bus 144 of the memory 140. The controller 106 has a first output 134 connected to a control input of the counter 112. The controller 106 has a first output 136 connected to a control input of the result FIFO 120. The controller 106 has a second output 138 connected to a control input of the checksum LFSR 116. The controller 106 has a third output 142 connected to a control input of the memory 140. The random seed generator 118 has a first output 146 connected to the checksum LFSR 116 and a second output 114 connected to a first input of the result FIFO 120. The random seed generator 118 has a reset input 108 which receives a reset signal generated from further circuitry (not shown). A second input of the result FIFO 120 and first input of comparison module 122 is connected to an output 150 of the checksum LFSR 116. An output 148 of the result FIFO 120 is connected to the second input of the comparison module 122. The output of the comparison module 122 is connected to the memory checker output 124.

The checksum engine 130 performs the checksum in hardware. In one example, the checksum LFSR 116 may be a 32-bit LFSR which implements a 32-bit cyclic redundancy check (CRC) such as for example used in the ethernet (IEEE 802.3) protocol. The counter 112 sequences from the start address provided by the first fuse address register 102 to the end address provided by the last fuse address register 104. The controller 106 provides appropriate control signals to the counter 112, checksum LFSR 116 and result FIFO to control the operation of the memory checking test. The controller 106 may be implemented in hardware or combination of hardware and software.

In one example, the functionality of the result FIFO 120 may be implemented as a single 32-bit register that holds the result of the LSFR 116 from the previous CRC operation. In other examples, result FIFO 120 may include multiple registers or other storage elements. The comparison module 122 compares the LFSR output 150 with the result FIFO output 148, i.e. compares the result of the current CRC operation with the result of the previous CRC operation. The comparison module 122 outputs a test result of a pass/fail bit which is set to fail if, at the end of the CRC operation, the contents of the checksum LSFR 116 do not match the reference value in the result FIFO 120. In some examples, the pass/fail bit result on the module checker output 124 may be accessed through an internal register (not shown) connected to the memory checker output 124. The internal register may be on a scan chain accessed for example via the JTAG interface or may be a software accessible register.

The random seed generator 118 generates a random seed value at the start of a sequence of tests which is used to seed the checksum LFSR 116. The random seed generator 118 may also generate a random seed value to initialize the result value. The random seed value for the result FIFO 120 may be the same or different to the seed value for the checksum LFSR 116. In one example, the random seed generator 118 may generate a random seed value from random entropy in uninitialized SRAM ( not shown) and flip-flops (not shown), which then pass through an LFSR (not shown).

In some examples, the checksum LFSR may be replaced by other logic that produces the equivalent result as a LFSR implementation. For example for a 32-bit word, the memory data may be processed as 32 bit words, by first XORing the data with the current CRC calculated value then using combinatorial logic that produces the result as if the value had been shifted through an LFSR 32 times.

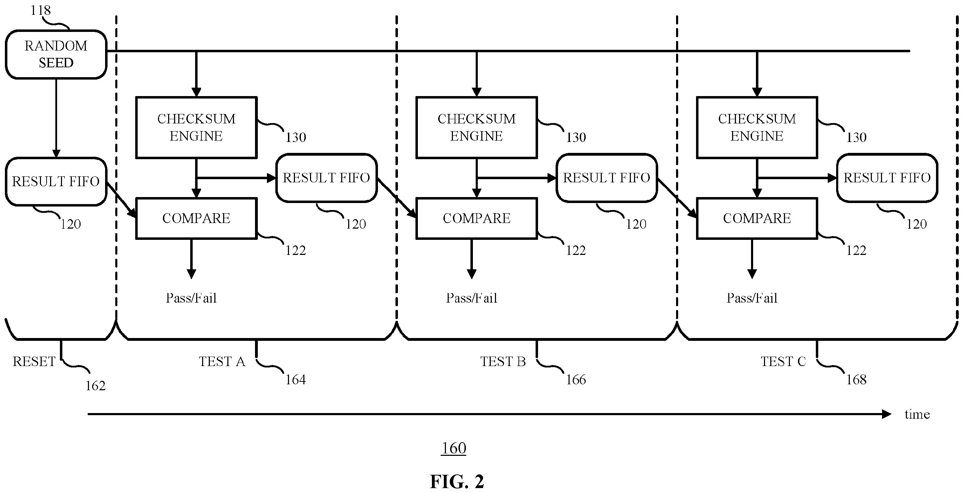

In some examples, the memory checker may be implemented for other bit widths than 32-bit, such as for example 16-bit or 64-bit.The memory checker 100 may apply a test sequence consisting of a number of test cycles with each memory test cycle using different read voltage thresholds. This test sequence may be used for example to validate fuse bit writes by confirming that the contents of a fusebox can be read back identically with different fuse bit read thresholds selected. This may ensure that the fuse bits have been written with sufficient voltage margin. An example test sequence is shown in figure 2 which illustrates a test sequence 160 using the memory checking apparatus 100 over time. This test sequence 160 shows the random seed generator, checksum engine 130, result FIFO 120 and compare block 122 across time left to right. The SoC or other integrated circuit including the memory checking apparatus may considered to be in a test mode of operation when the test sequence 160 is being carried out.

During an initialization period 162 following, for example, a reset or software command to start a test, the random seed generator 118 may generate random seed value(s) provided to the checksum engine 130 and the result FIFO 120 which are both set to random values. The seed value(s) generated during the initialization period 162 remain the same throughout the test sequence 160.

During TEST A corresponding to time period 164, the checksum is calculated by the checksum engine 130 and compared to the value in the result FIFO 120. As this is the first test after reset, the comparison will usually fail because result FIFO 120 contains a random value. Consequently this result may be ignored or reported as a pass. The checksum is also stored in the result FIFO 120 as the reference value ready for the next comparison.

During TEST B corresponding to time period 166, the checksum is calculated with the same random seed as TEST A. The result is compared with the reference value in the result FIFO 120 which corresponds to the checksum value of the previous test ( TEST A). This test will now pass if there were no changes in the secure memory region 110. The generated checksum during TEST B is also stored in the result FIFO 120 as the reference value ready for the next comparison.

TEST C corresponding to time period 168 operates the same way as TEST B. This may be repeated for as many times as necessary. A subsequent test sequence using a different seed value may be started by applying a reset or other means such as for example a software initiated request to start a test.

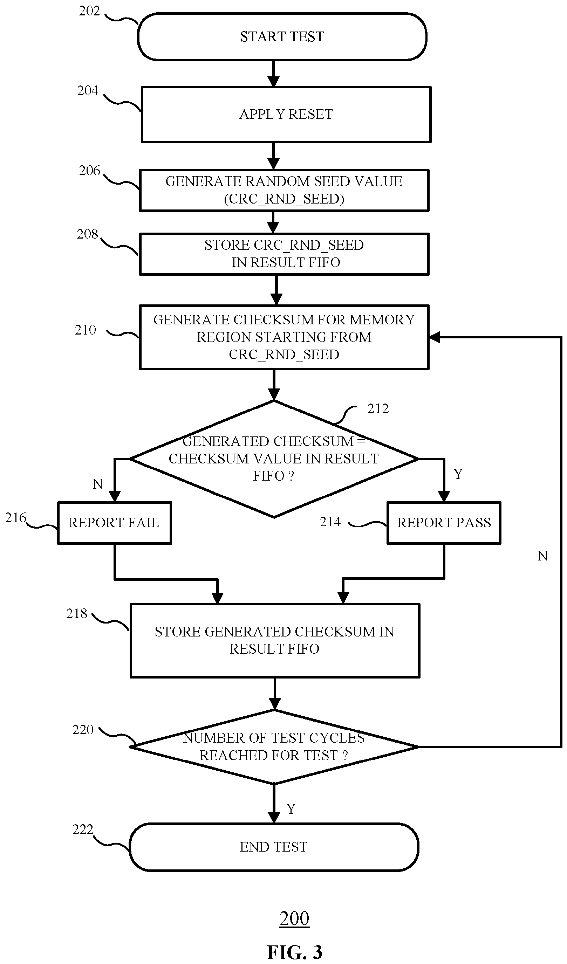

Figure 3 shows a method of memory checking 200 for an on-chip memory checker according to an embodiment. In step 202 the test is started. In step 204 a reset is applied. In other examples a different test start signal may be used. In step 206 a random seed value is generated for example by random seed generator 118. In step 208, the random seed value (CRC_RND_SEED) generated in step 206 is stored in an on-chip result FIFO, for example result FIFO 120. In step 210, a checksum is generated for example by checksum engine 130 for the data values in a memory region, for example such as secure memory region 110 starting from the random seed value CRC_RND_SEED generated in step 206. In step 212, the generated checksum is compared with a checksum value (reference value) in the result FIFO. If the generated checksum is the same as the checksum value in the result FIFO then a fail is reported in step 214. If the generated checksum is different to the checksum value in the result FIFO then a fail is reported in step 216. Following from either steps 214, 216, the method proceeds to step 218 and the newly generated checksum is stored in the result FIFO. In step 220, the method checks whether the desired number of test cycles has been reached for the specific test. If the desired number of test cycles has been reached, the method ends ( step 222), otherwise the method returns to step 210 and repeats. Each test cycle for the memory may use different read voltage thresholds, for example to validate fuse bit writes as previously described.

In conventional memory checkers, the checksum value is typically read by software and compared to a previous value, so the result value is known. In addition the checksum starting values are always constants, making the sequence predictable. This may result in potential security vulnerabilities to attacks such as reverse engineering the data as a function of the checksum (by backwards calculation or inference). Such process of backwards calculation (i.e., inverse function) is straightforward in linear checksums such as implemented by CRC or LFSR. Other attacks may include for example side channel leakage (e.g. power leakage) during the data processing

Internal RAM memories may have similar vulnerabilities when the system (or security subsystem) intends to verify the integrity of the memory's contents, for instance after resuming a low-power mode during which the memory array could have been attacked.

Embodiments of the memory checker and method store the checksum result in an internal (on-chip) FIFO which is used as the expected result for the next checksum. In addition, the checksum seed is randomized at the beginning of each session when the device is reset or power cycled, or upon software request. The checksum is never visible so the value cannot be compared or analysed to reverse-engineer the data as a function of checksum. Embodiments described enable a low implementation cost linear checksum function to check that the contents of a memory have not changed over a short time interval.

The checksum seed only changes every reset or fuse reload so that the CRC values will be consistent between resets. After a reset or software request, changing the checksum seed value may improve robustness against a side channel attack for example by monitoring the power during data processing. Changing the checksum seed value may also improve robustness against reverse engineering the data as a function of the checksum by backward calculation or inference.

In embodiments of the memory checker and method, the actual or expected checksum is not accessible by the user and remains in the internal hidden result FIFO. In embodiments, the size of the random seed value is at least the size of result FIFO in order to minimize the number of possible collisions i.e. two different random number draws giving the same random number out of chance.

In general, the expected checksum is not repeatable from device to device, or on the same device after a reset or power-cycle, because of the random seed value. There is the possibility of a collision but for a random seed of 32 bit size for data and CRC polynomials, such a possibility is unlikely. This possibility can be reduced further, for example by using more than 32 bits for the CRC polynomial and seed values.

Embodiments of the memory checker and method may for example be used during production testing and product validation of fuseboxes, other one-time-programmable memories or any secure memory region i.e. a memory region with sensitive data. For fuseboxes, the fuse bit writes are validated by confirming that the contents of the fusebox can be read back identically with different fuse bit read voltage thresholds selected, ensuring the fuse bits have been written with sufficient voltage margin.

A method and apparatus for checking the contents of a memory in an integrated circuit is described. The on-chip memory checker includes a result first-in-first-out storage element (FIFO), a checksum engine coupled to the memory, and a comparison module. The method includes the steps of generating a seed value and providing the seed value to the checksum engine. During a test sequence a number of tests are applied to the memory. Each test includes the steps of (i) generating a checksum of a plurality of data values stored in a memory region of the memory by the checksum engine (ii) comparing by the comparison module the checksum with a reference value provided by the result FIFO and (iii) outputting the test result. The checksum is stored in the result FIFO as a reference value for a subsequent test. Multiple test sequences with different (random) seed values may be used.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of memory checking in a device comprising a memory, a result first-in-first-out storage element (FIFO), a checksum engine coupled to the memory, and a comparison module, the method comprising:
generating a seed value;
providing the seed value to the checksum engine;
applying a test sequence comprising a plurality of tests, each test including the steps of:
generating a checksum of a plurality of data values stored in a memory region of the memory by the checksum engine;
comparing by the comparison module the checksum with a reference value provided by the result FIFO;
outputting a test result based on the comparison; and
storing the checksum in the result FIFO.

2. The method of claim 1 further comprising:
generating a further seed value;
providing the further seed value to the checksum engine;
applying a further test sequence comprising a plurality of further tests, each further test including the steps of:
generating the checksum of the plurality of data values by the checksum engine;
comparing by the comparison module the checksum with the reference value provided by the result FIFO;
outputting a test result based on the comparison; and
storing the checksum in the result FIFO.

3. The method of any preceding claim further comprising initializing the result FIFO with the seed value.

4. The method of any preceding claim, wherein the reference value is the checksum of a previous test in the test sequence.

5. The method of any preceding claim, wherein each test in the test sequence is applied using a different memory bit read voltage threshold.

6. The method of any preceding claim, wherein the plurality of data values are stored in one-time-programmable memory.

7. A memory checker configured to be coupled to a memory having a memory region to be checked, the memory checker comprising:
a checksum engine coupled to the memory;
a result first-in-first-out storage element (FIFO) coupled to the checksum engine;
a comparison module coupled to the checksum engine and the result FIFO;
a random seed generator coupled to the checksum engine; wherein
during a test mode of operation, the random seed generator is configured to generate a first random seed value, and for each test of a first plurality of tests:
the checksum engine is configured to be initialized with the first random seed value and to generate a checksum of a plurality of data values stored in the memory region;
the comparison module is configured to compare the checksum with a reference value provided by the result FIFO and output a test result based on the comparison; and
the result FIFO is configured to store the checksum.

8. The memory checker of claim 7, wherein the random seed generator is configured to generate the first random seed value in response to at least one of a reset signal and software command.

9. The memory checker of claim 7 or 8, wherein during the test mode of operation the random seed generator is further configured to generate a second random seed value, and for each test of a second plurality of tests:
the checksum engine is configured to be initialized with the second random seed value and to generate a checksum of the plurality of data values;
the comparison module is configured to compare the checksum with a reference value provided by the result FIFO and output a test result based on the comparison; and
the result FIFO is configured to store the checksum.

10. The memory checker of any of claims 7 to 9, wherein the result FIFO is coupled to the random seed generator and further initializing the result FIFO with a seed value.

11. The memory checker of claim 9, wherein the reference value is the checksum of a previous test in the first plurality of tests and the second plurality of tests.

12. The memory checker of claim 9, wherein the reference value is the checksum of a previous test in the first plurality of tests and the second plurality of tests.

13. The memory checker of claim 9, wherein each test in the first plurality of tests and the second plurality of tests is applied using a different memory bit read voltage threshold.

14. The memory checker of any of claims 7 to 13, wherein the checksum engine further comprises:
a counter having a counter output configured to be coupled to an address input of the memory;
a first address register coupled to the counter and configured to store a first address of the memory region;
a last address register coupled to the counter and configured to store a last address of the memory region;
a checksum linear feedback shift register (LFSR) configured to be coupled to a data output of the memory, the random seed generator, the result FIFO and the comparison module; and
wherein during each test the counter is configured to generate a sequence of addresses from the first memory region address to the last memory region address, and the checksum LFSR is configured to generate the checksum of the plurality of data values.

15. The memory checker of claim 14, further comprising a controller configured to be coupled to the memory and coupled to the checksum LFSR, the result FIFO, and the counter and configured to control the counter to reset the counter and the checksum LFSR at a start of each test and to control the result FIFO to update the reference value from the checksum at an end of each test.
